# EUROPEAN PATENT SPECIFICATION

(11) **EP 2 919 307 B1**
(45) Date of publication and mention of the grant of the patent: **06.12.2017**
(21) Application number: 13853688.3
(22) Date of filing: 02.10.2013
(51) Int. Cl.: H01M 4/86, H01M 8/1004

(54) **ELECTRODE MATERIAL, MEMBRANE-ELECTRODE ASSEMBLY, FUEL CELL STACK AND METHOD FOR MANUFACTURING ELECTRODE MATERIAL**
ELEKTRODENMATERIAL, MEMBRANELEKTRODENANORDNUNG, BRENNSTOFFZELLENSTAPEL UND VERFAHREN ZUR HERSTELLUNG EINES ELEKTRODENMATERIALS
MATÉRIAU D'ÉLECTRODE, ENSEMBLE MEMBRANE-ÉLECTRODE, ASSEMBLAGE DE PILES À COMBUSTIBLE ET PROCÉDÉ DE FABRICATION DE MATÉRIAU D'ÉLECTRODE

(30) Priority: 09.11.2012 JP 2012247835
(43) Date of publication of application: 16.09.2015
(73) Proprietor: JX Nippon Oil & Energy Corporation, Chiyoda-ku Tokyo 100-8162 (JP)
(72) Inventor: FUJII, Keitaro, Tokyo 100-8162 (JP); SATO, Yasushi, Tokyo 100-8162 (JP)
(74) Representative: Algemeen Octrooi- en Merkenbureau B.V.
(86) International application number: PCT/JP2013/005870
(87) International publication number: WO 2014/073153

(56) References cited:
- JP-A- 2009 235 467
- JP-A- 2010 067 509
- JP-A- 2011 238 371
- MATSUMORI H ET AL: "Preparation of carbon nanotube-supported Pt catalysts covered with silica layers; application to cathode catalysts for PEFC", APPLIED CATALYSIS A: GENERAL, ELSEVIER SCIENCE, AMSTERDAM, NL, vol. 373, no. 1-2, 31 January 2010 (2010-01-31), pages 176-185, XP026813868, ISSN: 0926-860X [retrieved on 2009-11-14]
- ZHU T ET AL: "SiO2 stabilized Pt/C cathode catalyst for proton exchange membrane fuel cells", APPLIED SURFACE SCIENCE, ELSEVIER, AMSTERDAM, NL, vol. 257, no. 6, 7 October 2010 (2010-10-07), pages 2371-2376, XP027562530, ISSN: 0169-4332 [retrieved on 2010-12-16]
- SAKAE TAKENAKA ET AL: "Preparation of supported Pt-Co alloy nanoparticle catalysts for the oxygen reduction reaction by coverage with silica", JOURNAL OF CATALYSIS, vol. 274, no. 2, 9 September 2010 (2010-09-09), pages 228-238, XP055131112, ISSN: 0021-9517, DOI: 10.1016/j.jcat.2010.07.005
- YONG-JAE CHOI ET AL: "Spontaneous formation of silver nanoparticles in aminosilica", JOURNAL OF SOL-GEL SCIENCE AND TECHNOLOGY, KLUWER ACADEMIC PUBLISHERS, BO, vol. 51, no. 1, 6 March 2009 (2009-03-06), pages 124-132, XP019683098, ISSN: 1573-4846

## Description

### [TECHNICAL FIELD]

The present invention relates to an electrode material used for fuel cells and electrolysis cells.

### [BACKGROUND ART]

A polymer electrolyte fuel cell (PEFC) is a device for generating electricity by the following electrochemical reactions, with a fuel gas containing hydrogen supplied to an anode (fuel electrode) and an oxidant gas containing oxygen supplied to a cathode (air electrode).

Anode : H2→2H⁺+2e⁻ --- (1)

Cathode : (1/2)O₂+2H⁺+2e⁻→H₂O --- (2)

The anode and cathode are each of a stacked structure of catalyst layers and gas diffusion layers. The catalyst layers are each a layer comprising carbon particles supporting the catalyst and a proton-conducting ionomer. The gas diffusion layers serve as a pathway through which the oxidant gas or fuel gas passes. A membrane electrode assembly (MEA) is constructed of the catalyst layers of the respective electrodes placed opposite to each other with a proton-conducting electrolyte membrane held in between them.

Since cathode catalyst layers present a severe ambience of being acidic and of high potential, the catalyst to be used must show a high chemical stability. Further, since the reaction rate of a cathode reaction (oxygen reduction reaction) is very slow, the catalyst is required to be highly active. Of Pt or Pt alloy, which are used as the cathode catalyst today, the stability and activity are not necessarily sufficient. Also, since Pt is extremely expensive, it is desirable that less-costly catalysts be used, but then the above-mentioned problems will be more pronounced with such catalysts.

Proposed in Patent Document 1 is an electrode material having the surface of the catalyst (Pt) supported by the carbon support coated with a porous inorganic material (SiO₂). This electrode material can suppress the elution of the catalyst (Pt) in a cathode ambience to a certain degree.

### [Related Art List]

### [Patent documents]

The scientific article "Preparation of carbon nanotube-supported Pt catalysts covered with silica layers; application to cathode catalysts for PEFC", APPLIED CATALYSIS A: GENERAL, ELSEVIER SCIENCE, AMSTERDAM, NL, vol. 373, no. 1-2, 31 January 2010 (2010-01-31), pages 176-185 relates to multi-walled carbon nanotube-supported Pt metal particle (Pt/CNT) catalysts covered with silica layers with different thickness and density. The Pt/CNT covered with silica layers (Si02/Pt/CNT) was prepared by the successive hydrolysis of 3-aminopropyltriethoxysilane (APTS) and tetraethoxysilane (TEOS). The catalytic performance of these Si02/Pt/CNT as cathode catalysts in polymer electrolyte fuel cells was examined.

The scientific article "Si02 stabilized Pt / C cathode catalyst for proton exchange membrane fuel cells", ZHU T ET AL, APPLIED SURFACE SCIENCE, ELSEVI ER, AMSTERDAM, NL,vol. 257, no. 6, 7 October 2010 (2010-10-07), pages 2371-2376, describes the preparation of Si02 stabilized Pt/C catalyst (SiO2/Pt/C) by the hydrolysis of alkoxysilane, and examines the possibility that the SiO2/Pt/C is used as a durable cathode catalyst for proton exchange membrane fuel cells (PEMFCs).

The scientific article "Preparation of supported Pt-Co alloy nanoparticle catalysts for the oxygen reduction reaction by coverage with silica", SAKAE TAKENAKA ET AL, JOURNAL OF CATALYSIS, vol. 274, no. 2, 9 September 2010 (2010-09-09), pages 228-238, The scientific article "Spontaneous formation of silver nanoparticles in aminosilica", YONG-JAE CHOI ET AL, JOURNAL OF SOL-GEL SCIENCE AND TECHNOLOGY, KLUWER ACADEMIC PUBLISHERS, BO, vol. 51, no. 1, 6 March 2009 (2009-03-06), pages 124-132, relates to Pt-based alloy catalysts such as carbon black-supported Pt-Co catalysts (Pt-CoICB) that are used in the oxygen reduction reaction in polymer-electrolyte fuel cells (PEFCs) and are generally treated at high temperatures to allow for alloy formation.

The scientific article: "Spontaneous formation on of silver nanoparticles in aminosilica", YONG-JAE CHOI ET AL, JOURNAL OF SOL-GEL SCIENCE AND TECHNOLOGY, KLUWER ACADEMIC PUBLISHERS, BO, vol. 51, no. 1, 6 March 2009 (2009-03-06), pages 124-132, reports a rapid and spontaneous metallization process associated with sol-gel reaction of aminosilane that can be utilized to synthesize silver embedded silica nanocomposites without involving additional reducing agents.

[Patent document 1] Japanese Unexamined Patent Application Publication No. 2008-4541.

### [SUMMARY OF THE INVENTION]

### [PROBLEM TO BE SOLVED BY THE INVENTION]

However, the electrode material as cited in Patent document 1 physically suppresses the elution of the catalyst metal. Thus, when the pore size of the porous inorganic material is large or when the catalyst is of a metal baser than (namely, less noble than) Pt, the elution of the catalyst metal cannot sometimes be suppressed sufficiently, which leaves room for improvement.

The present invention has been made in view of the foregoing problems, and a purpose thereof is to provide a technology by which the durability of the electrode material used for fuel cells, electrolysis cells and the like is improved.

### [MEANS TO SOLVE THE PROBLEMS]

One embodiment of the present invention relates to an electrode material. The electrode material includes: an electrode catalyst; and a porous inorganic material partially coating a surface of the electrode catalyst, wherein a pore surface of the porous inorganic material is modified by a basic functional group.

In the above-described electrode material, the basic functional group contains at least one or more of primary amine derivative, secondary amine derivative, tertiary amine derivative, and quarternary ammonium derivative. The porous inorganic material contains silica (SiO₂). The equivalent of the basic functional group may be 0.01 meq/g or more relative to the porous inorganic material. An average coating thickness in a part of the inorganic material coating the electrode catalyst may be 0.5 nm to 100 nm. The electrode catalyst may contain an active catalyst comprised of a metal, a metallic complex, an oxide, a nitride, or a carbide containing at least one or more of Sc, Ti, V, Cr, Mn, Fe, Co, Ni, Cu, Sr, Y, Zr, Nb, Mo, Ru, Rh, Pd, Ag, Sn, Ba, La, Ce, Hf, Re, Os, Ir, Pt, and Au. The electrode catalyst is of a form such that the active catalyst is supported by a conductive support. The conductive support may be a conductive carbon material, such as acetylene black, ketjen black, fullerene, carbon nanotube, carbon nanoonion, a conductive metal oxide, such as titanium oxide or tin oxide, or a mixture of these.

The average particle diameter of active catalyst particles may be 100 nm or smaller, preferably 20 nm or smaller, and more preferably 10 nm or smaller.

The density of the active catalyst calculated as (the mass of active catalyst)/[(the mass of active catalyst) + (the mass of conductive support)], may be 5 to 80%.

The average pore size of the porous inorganic material may be 0.1 nm to 1000 nm.

Still another embodiment of the present invention relates to a membrane electrode assembly. The membrane electrode assembly includes: an ion-conducting electrolyte membrane; a cathode catalyst layer provided on one surface of the electrolyte membrane; and an anode catalyst layer provided on one surface of the electrolyte membrane, wherein at least one of the cathode catalyst layer and the anode catalyst layer includes an electrode material according to any one of the above-described embodiments.

Still another embodiment of the present invention relates to a fuel cell stack. The fuel cell stack includes a membrane electrode assembly according to the above-described embodiment.

Still another embodiment of the present invention relates to a method of manufacturing an electrode material. The method of manufacturing the electrode material includes: partially coating a surface of an electrode catalyst with a porous inorganic material; and modifying a pore surface of the porous inorganic material by a basic functional group.

In the above-described method of manufacturing the electrode material, the modifying the pore surface thereof by the basic function group is to react the porous inorganic material with an organosilane compound, and the organosilane compound contains at least one or more of primary amino group, secondary amino group, tertiary amino group, and quarternary ammonium group.

It is to be noted that any arbitrary combinations or rearrangement, as appropriate, of the aforementioned constituting elements and so forth are all effective as and encompassed by the embodiments of the present invention.

### [ADVANTAGE OF THE PRESENT INVENTION]

The present invention improves the durability of an electrode material used for fuel cells, electrolysis cells or the like.

### [BRIEF DESCRIPTION OF THE DRAWINGS]

FIG. 1 is a schematic illustration showing a constitution of an electrode material according to an embodiment of the present invention;
FIG. 2 is a schematic diagram showing a reaction mechanism of a hydrogen oxidation reaction when an electrode material according to an embodiment of the present invention is used as an anode material for PEFC;
FIG. 3 is a schematic diagram showing a reaction mechanism of an oxygen reduction reaction when an electrode material according to an embodiment of the present invention is used as a cathode material for PEFC;
FIG. 4 schematically shows a structure of a fuel cell according to an embodiment;
FIG. 5 is a transmission electron microscope (TEM) image where an image of a porous inorganic material (SiO₂) coating an electrode catalyst according to a first exemplary embodiment is taken by TEM;
FIG. 6 is a graph showing results of power generation tests at an initial state and after a potential cycling test, for fuel cells according to a first exemplary embodiment and a first comparative example;
FIG. 7 is a graph showing results of cyclic voltammetric (CV) measurements at an initial state and after a potential cycling test, for a fuel cell according to a first exemplary embodiment; and
FIG. 8 is a graph showing results of CV measurements at an initial state and after a potential cycling test, for a fuel cell according to a first comparative example.

### [MODE FOR CARRYING OUT THE INVENTION]

Hereinbelow, the embodiments of the present invention where an electrode material is used as one for a polymer electrolyte fuel cell (PEFC) will be described with reference to the accompanying drawings. These embodiments of the present invention for the electrode material are not limited by such a use.

### (1) Electrode material

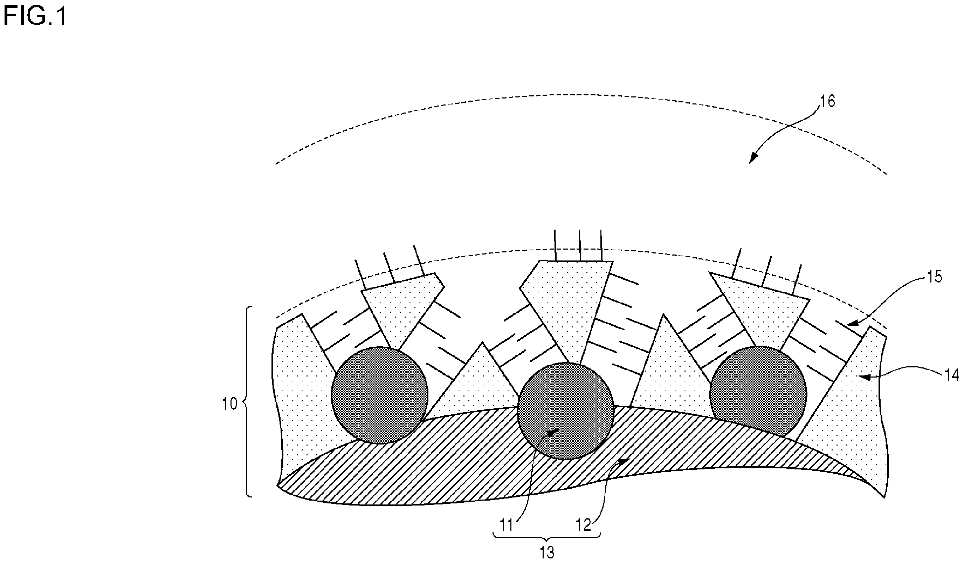

FIG. 1 is a schematic illustration showing a constitution of an electrode material according to an embodiment of the present invention. As shown in FIG. 1, an electrode material 10 of the present embodiment comprises an electrode catalyst 13, which includes a conductive support 12 supporting an active catalyst 11, and a porous inorganic material 14 partially coating the electrode catalyst 13. And the pore surfaces of the porous inorganic material 14 are modified by a basic functional group 15. Also, mainly, an electrolyte (ionomer) 16 having proton conductivity is mixed into the aforementioned electrode material 10.

These components will be described respectively hereinbelow.

### (i) Active catalyst

The active catalyst 11 used as the electrode material for polymer electrolyte fuel cells may be any known catalyst without any particular limitation as long as it is active in hydrogen oxidation reaction or oxygen reduction reaction. More specifically, the active catalyst is selected from among the metals, metallic complexes, oxides, nitrides, carbides, and the like of Sc, Ti, V, Cr, Mn, Fe, Co, Ni, Cu, Sr, Y, Zr, Nb, Mo, Ru, Rh, Pd, Ag, Sn, Ba, La, Ce, Hf, Re, Os, Ir, Pt, and Au. However, from the viewpoint of cost, the active catalyst not containing platinum is preferred.

While the shape and size of the active catalyst 11 may be any shape and size in the known art without any particular limitation, the shape of the active catalyst 11 is preferably particles when it is to be supported by a conductive support.

The smaller the average particle diameter of active catalyst particles is, the larger the electrochemically effective surface area will be, resulting in higher oxygen reduction activity. Therefore, the average particle diameter is preferably 100 nm or smaller, more preferably 20 nm or smaller, and most preferably 10 nm or smaller. It is to be noted that the average particle diameter of active catalyst particles in an embodiment of the present invention can be estimated from the half width of the peak in X-ray diffraction or from a transmission electron microscope (TEM) image.

The density of the active catalyst 11, which is (the mass of active catalyst 11) / [(the mass of active catalyst 11) + (the mass of conductive support 12)], is preferably 5 to 80%. The density of the active catalyst 11 lower than 5% increases the thickness of the cathode catalyst layer necessary to contain a desired mass of the active catalyst 11. And this impedes the ion conduction and gas diffusion necessary for electrode reaction, which results in a failure to achieve sufficient power generation performance. The density of the active catalyst 11 higher than 80% causes the congestion of active catalyst particles, which will impede gas diffusion and the like, resulting in insufficient power generation performance.

### (ii) Conductive support

The conductive support 12 may be any known support material in the known art without any particular limitation as long as it has a specific surface area capable of supporting the active catalyst particles in a desired dispersed state and having an adequate conductive property. More specifically, the conductive support 12 as used herein may be a conductive carbon material, such as acetylene black, ketjen black, fullerene, carbon nanotube, or carbon nanoonion, a conductive metal oxide, such as titanium oxide or tin oxide, or a mixture of these.

The BET specific surface area of the conductive support 12 is preferably 10 to 2000 m²/g. If the BET specific surface area of the conductive support 12 is smaller than 10 m²/g, it becomes difficult to support the active catalyst particles uniformly. As a result, the electrochemically effective surface area of the active catalyst particles will be smaller, thus bringing about a drop in power generation performance. If the BET specific surface area of the conductive support 12 is larger than 2000 m²/g, then there may develop cases of less than adequate durability of the conductive support 12.

### (iii) Porous inorganic material

The porous inorganic material 14 may be any inorganic material that is porous and stable in the environment of a polymer electrolyte fuel cell. More specifically, SiO₂, TiO₂, ZrO₂ and the like may be used. It is preferable that the material contains SiO₂. The reason is because containing SiO₂ in the porous inorganic material allows easy and stable modification of the pore surfaces by the basic functional group that will be discussed later.

The coating thickness of the porous inorganic material 14 is preferably 0.5 nm to 100 nm. If the coating thickness of the porous inorganic material 14 is less than 0.5 nm, then the ionomer may penetrate as far as the active catalyst particles, which may result in a failure to suppress the elution of the active catalyst particles sufficiently. The coating thickness of the porous inorganic material 14 of more than 100 nm impedes the ion conduction and gas diffusion necessary for electrode reaction, thus leading to insufficient power generation performance. It is to be noted that the coating thickness of the porous inorganic material 14 can be estimated from a transmission electron microscope (TEM) image.

The average pore size of the porous inorganic material 14 is preferably 0.1 nm to 100 nm. The average pore size of the porous inorganic material 14 of smaller than 0.1 nm impedes the ion conduction and gas diffusion necessary for electrode reaction, thus leading to a failure to achieve sufficient power generation performance. The average pore size of the porous inorganic material 14 of larger than 100 nm causes the penetration of the ionomer into the pores and the elution of the active catalyst particles into the ionomer, thus failing to achieve adequate durability.

### (iv) Basic functional group

The basic functional group 15 may be any functional group having a desired basicity. More specifically, the functional group usable is any functional group containing at least one or more of primary amine derivative, secondary amine derivative, tertiary amine derivative, quarternary ammonium derivative, pyridine derivative, and aromatic amine derivative. Of these derivatives, quarternary ammonium derivative is the most preferable.

The equivalent of the basic functional group 15 is preferably 0.01 meq/g or more relative to the porous inorganic material 14. If the equivalent of the basic functional group 15 is less than 0.01 meq/g relative to the porous inorganic material 14, then the vicinity of the active catalyst particles does not become a sufficiently basic ambience, and therefore there may be cases where the elution of the active catalyst particles cannot be suppressed sufficiently. It is to be noted here that the equivalent of the basic functional group 15 can be calculated from the mass of the basic functional group 15 as measured by a thermogravimetric analysis.

### (v) Ionomer

The ionomer 16 may be any known one without any particular limitation as long as it has a high proton conductivity. Preferably, it has not only the high proton conductivity as described above, but also high gas permeability and high chemical durability. More specifically, the examples of ionomers that are citable may be perfluorocarbon polymer, aromatic polyether ether ketone, and polysulfone, which have acid functional groups. As for the acid functional groups, sulfonic acid, phosphonic acid, or carboxylic acid, for example, may be exemplified. Nafion (made by DuPont: registered trademark) is an example of perfluorocarbon polymer having sulfonic acid group.

The mixing ratio of the ionomer 16 and the electrode catalyst 13 ([the mass of ionomer 16] / [the mass of electrode catalyst 13]) is not subject to any particular limitation. It may be selected as appropriate as long as there will be adequate proton conduction and gas diffusion necessary for electrode reaction within the catalyst layer to be discussed later. The mixing ratio is preferably 1% to 1000% and more preferably 5% to 100%. If the mixing ratio of the ionomer 16 and the electrode catalyst 13 is lower than 1%, proton conduction necessary for electrode reaction does not occur adequately, thus failing to provide power generation performance sufficiently. If the mixing ratio of the ionomer 16 and the electrode catalyst 13 is higher than 1000%, proton conduction necessary for electrode reaction does not occur adequately, thus failing to provide power generation performance sufficiently.

By implementing an arrangement as described above, the active catalyst 11 is separated from the acidic ionomer 16, which creates a basic ambience in the vicinity of the active catalyst 11. This will cause a drop in electrode potential with respect to a standard hydrogen electrode (SHE), thereby effectively suppressing the elution of many types of electrode catalyst 13. Furthermore, it will enhance the electrode reaction rate for many types of electrode catalyst.

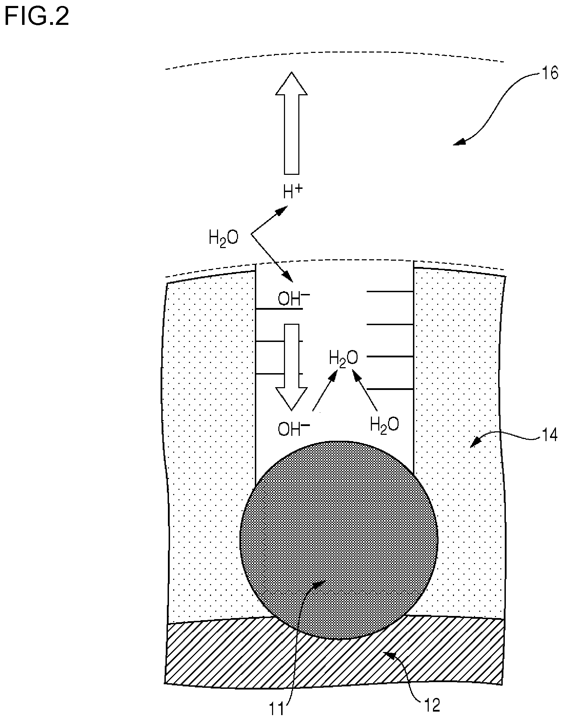

FIG. 2 is a schematic diagram showing a reaction mechanism of the hydrogen oxidation reaction when the electrode material according to an embodiment of the present invention is used as the anode material for the polymer electrolyte fuel cell. Since a basic ambience is created in the vicinity of the active catalyst, a hydrogen oxidation reaction as expressed by Equation (3) below occurs on the surface of the active catalyst. Also, a dissociation reaction of water as expressed by Equation (4) below occurs at the interfaces between the acidic ionomer and the pores of the basic porous inorganic material. The H⁺ generated as shown by Equation (4) is conducted to the cathode through the ionomer and the electrolyte membrane. Also, the OH⁻ generated as shown by Equation (4) is conducted to the surface of the active catalyst, passing through the pores of the porous inorganic material. In the anode as a whole, a hydrogen oxidation reaction as expressed by equation (5) below, which is the combination of Equations (3) and (4), occurs in a manner similar to the anode reaction of the conventionally known polymer electrolyte fuel cell.

H₂+2OH⁻→2H₂O+2e⁻ --- (3)

H₂O→H⁺+OH⁻ --- (4)

H₂+2e⁻→2H⁺ --- (5)

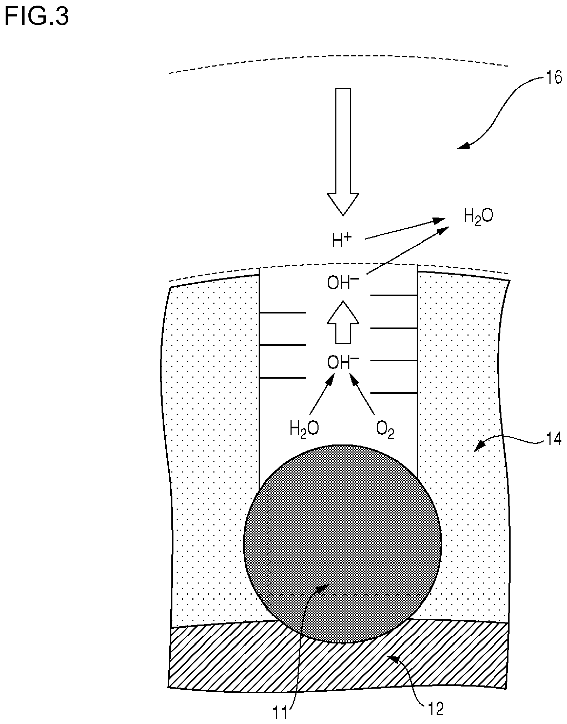

FIG. 3 is a schematic diagram showing a reaction mechanism of the oxygen reduction reaction when the electrode material according to an embodiment of the present invention is used as the cathode material for the polymer electrolyte fuel cell. Since a basic ambience is created in the vicinity of the active catalyst, an oxygen reduction reaction as expressed by equation (6) below occurs on the surface of the active catalyst. Also, a formation reaction of water as expressed by Equation (7) below occurs at the interfaces between the acidic ionomer and the pores of the basic porous inorganic material. The H+ reacting as shown by Equation (7) is conducted from the anode through the ionomer and the electrolyte membrane. Also, the OH⁻ reacting as shown by Equation (7) is conducted from the surface of the active catalyst, passing through the pores of the porous inorganic material. In the cathode as a whole, an oxygen reduction reaction as expressed by equation (8) below, which is the combination of Equations (6) and (7), occurs in a manner similar to the cathode reaction of the conventionally known polymer electrolyte fuel cell.

O₂+2H₂O+4e⁻→4OH⁻ --- (6)

H⁺+OH⁻→H₂O→ --- (7)

O₂+4H⁺+4e⁻→2H₂O --- (8)

### (2) Method for manufacturing electrode material

Now, of the method for manufacturing an electrode material according to an embodiment of the present invention, a description is given of a process of coating at least a part of the surface of the electrode catalyst with a porous inorganic material and a process of modifying the pore surfaces of the porous inorganic material by a basic functional group.

### (i) Process of coating at least a part of the surface of the electrode catalyst with a porous inorganic material

The process of coating at least a part of the surface of the electrode catalyst with a porous inorganic material can be accomplished by any known method without any particular limitation. An example is explained hereinbelow.

An electrode catalyst is dispersed into a solvent of a predetermined temperature. The solvent as used herein may be water, ethanol, or their mixture, for instance, but is not subject to any particular limitation. The temperature, too, is not subject to any particular limitation.

Next, a predetermined amount of pH adjuster is added to the solvent. The pH adjuster may be nitric acid, ammonia, or triethylamine, for instance, but is not subject to any particular limitation.

Next, a precursor 1 of the porous inorganic material is added, and the mixture is stirred for a predetermined length of time. The precursor 1 of the porous inorganic material may be any precursor that gets adsorbed to the active catalyst selectively. More specifically, it may be 3-aminopropyltriethoxysilane or the like, for instance. The stirring time may be any length of time sufficient to allow the porous inorganic material to be adsorbed to the active catalyst selectively and is not subject to any particular limitation.

Next, a precursor 2 of the porous inorganic material is added, and the mixture is stirred for a predetermined length of time. The precursor 2 of the porous inorganic material may be any precursor that turns into a gel through hydrolysis and condensation. More specifically, it may be tetraethoxysilane, metyltriethoxysilane, or a mixture of these, for instance. The stirring time may be any length of time sufficient to allow the desired hydrolysis and condensation to occur and is not subject to any particular limitation.

Then the sample is subjected to cleaning, separation, drying, and finally calcination. The methods of cleaning, separation, and drying may be known methods without any particular limitation. The atmosphere for calcination is not subject to any particular limitation. However, when the conductive support of the electrode catalyst contains any carbon material, it is preferable that the atmosphere is an inert gas atmosphere, a reducing gas atmosphere, or a mixed atmosphere of these gases to prevent oxidation reaction. The inert gas as used herein may be helium, nitrogen, or argon, for instance. The reducing gas may be hydrogen, for instance. The calcination temperature and the calcination (sintering) time may be selected as appropriate as long as they can produce a desired pore structure.

### (ii) Process of modifying the pore surfaces of a porous inorganic material by a basic functional group

The process of modifying the pore surfaces of a porous inorganic material by a basic functional group can be accomplished by known methods without any particular limitation. More specifically, a method for chemically coupling a porous inorganic material and an organosilane compound having a basic functional group and a hydrolyzable group through the hydrolysis and condensation is selectable. An example is explained hereinbelow.

The sample obtained in the process of coating at least part of the surface of the electrode catalyst with a porous inorganic material is dispersed into a solvent of a predetermined temperature. The solvent as used herein may be water, ethanol, toluene, or their mixture, but is not subject to any particular limitation. The temperature, too, is not subject to any particular limitation.

Next, an organosilane compound having a basic functional group and a hydrolyzable group is added, and the mixture is stirred for a predetermined length of time. The organosilane compound having a basic functional group and a hydrolyzable group may be 3-aminopropyltriethoxysilane, 3-(2-aminoethylamino) propyltrimethoxysilane, [3-(phenylamino) propyl] trimethoxysilane, [3-(methylamino) propyl] trimethoxysilane, 3-(diethylamino) propyltrimethoxysilane, or trimethyl [3-(triethoxysilyl) propyl] ammonium chloride, for instance. The stirring time may be any length of time sufficient to allow a desired hydrolysis and condensation to occur between the porous inorganic material and the organosilane compound having a basic functional group and a hydrolyzable group and is not subject to any particular limitation. It is to be noted that a predetermined amount of pH adjuster may be added before adding the organosilane compound having a basic functional group and a hydrolyzable group. The pH adjuster may be nitric acid, ammonia, or trimethylamine, but is not subject to any particular limitation.

Then the sample is subjected to cleaning, separation, and drying. The methods of cleaning, separation, and drying may be known methods without any particular limitation.

Then calcination may be performed as appropriate. The atmosphere for calcination is not subject to any particular limitation. However, when the conductive support of the electrode catalyst contains any carbon material, it is preferable that the atmosphere is an inert gas atmosphere, a reducing gas atmosphere, or a mixed atmosphere of these gases to prevent oxidation reaction. The inert gas as used herein may be helium, nitrogen, or argon, for instance. The reducing gas may be hydrogen, for instance. The calcination temperature and the calciantion time may be selected as appropriate as long as the basic functional group does not get decomposed.

Suppose here that the organosilane compound having a basic functional group and a hydrolyzable group used is a quarternary ammonium derivative and the counterion used is other than hydroxyl ion. In this case, it is preferable that the sample obtained in the above-described process is immersed in a basic aqueous solution to substitute hydroxyl ion for the counterion and then washed with deionized water. The basic aqueous solution may be potassium hydroxide aqueous solution, sodium hydroxide aqueous solution, or ammonia water, for instance, but is not subject to any particular limitation. The immersion time may be subject to no particular limitation as long as it is long enough to substitute hydroxyl ion for the counterion.

### (3) Fuel cell

Now, a description will be given of a fuel cell according to an embodiment of the present invention with reference to figures.

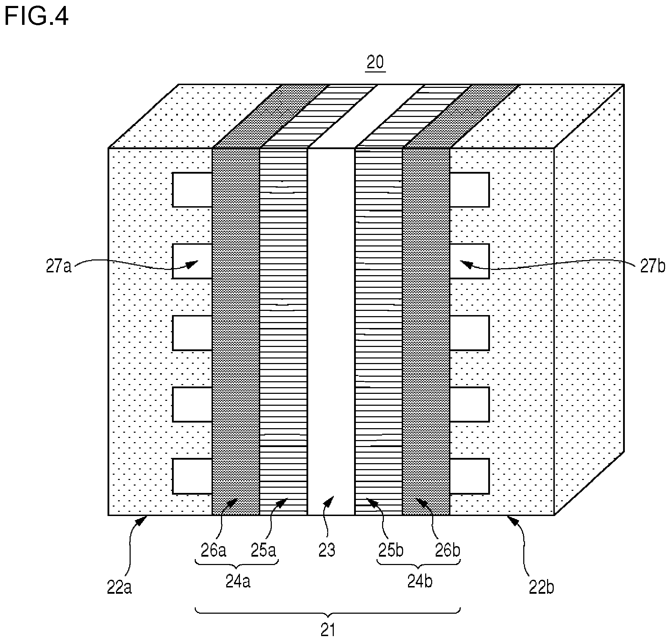

FIG. 4 is a schematic illustration showing a structure of a fuel cell 20 of an embodiment. The fuel cell 20 has a membrane electrode assembly 21 in a flat plate shape with a separator 22a and a separator 22b provided on the respective sides of the membrane electrode assembly 21. A fuel cell stack, which is a layered product, is formed by stacking a plurality of fuel cells 20 through the medium of the separator 22a and separator 22b (namely, with the separator 22a and separator 22b placed between the plurality of fuel cells 20).

The membrane electrode assembly 21 includes an electrolyte membrane 23, an anode 24a, and a cathode 24b. The anode 24a has a layered product comprised of an anode catalyst layer 25a and an anode gas diffusion layer 26a. On the other hand, the cathode 24b has a layered product comprised of a cathode catalyst layer 25b and a cathode gas diffusion layer 26b. The anode catalyst layer 25a and the cathode catalyst layer 25b are disposed opposite to each other with the electrolyte membrane 23 in between. The anode gas diffusion layer 26a is disposed on a surface of the anode catalyst layer 25a opposite from the electrolyte membrane 23. Also, the cathode gas diffusion layer 26b is disposed on a surface of the cathode catalyst layer 25b opposite from the electrolyte membrane 23.

The separator 22a disposed on an anode 24a side is provided with gas passages 27a. Hydrogen or a reformed gas containing hydrogen is distributed from a fuel supply manifold (not shown) to the gas passages 27a, and is supplied to the membrane electrode assembly 21 through the gas passages 27a. In a similar manner, the separator 22b disposed on a cathode 24b side is provided with gas passages 27b. Air as the oxidizer is distributed from an oxidizer supply manifold (not shown) to the gas passages 27b, and is supplied to the membrane electrode assembly 21 through the gas passages 27b.

These components will be described respectively hereinbelow.

### (i) Electrolyte membrane

The electrolyte membrane 23 may be any electrolyte membrane as long as it has high gas barrier properties and high proton conductivity. Preferably, the electrolyte membrane 23 has high chemical and mechanical durability in addition to the high gas barrier properties and high proton conductivity. More specifically, an example of electrolyte membrane may be perfluorocarbon polymer, aromatic polyether ether ketone, or polysulfone, for instance, which has an acid functional group. Sulfonic acid, phosphonic acid, or carboxylic acid, for instance, may be exemplified as the acid function group. Nafion (made by DuPont: registered trademark) is an example of perfluorocarbon polymer having a sulfonic acid group.

The membrane thickness of the electrolyte membrane 23 is preferably 5 to 300 µm. If the membrane thickness of the electrolyte membrane 23 is thinner than 5 µm, then sufficient gas barrier properties and mechanical durability will not be obtained. If the membrane thickness of the electrolyte membrane 23 is thicker than 300 µm, there will be greater proton conductive resistance, which will result in a failure to achieve sufficient power generation performance.

### (ii) Catalyst layers

The fuel cell 20 according to an embodiment of the present invention is such that at least one of the anode catalyst layer 25a and the cathode catalyst layer 25b is made of an electrode material, for polymer electrolyte fuel cells, according to an embodiment of the present invention. Preferably the cathode catalyst layer 25b or more preferably both of the anode catalyst layer 25a and the cathode catalyst layer 25b are made of the electrode material, for polymer electrolyte fuel cells, according to an embodiment of the present invention.

The electrode material as used herein for polymer electrolyte fuel cells according to the present embodiments has already been described, and the repeated description thereof will be omitted.

The thickness of the catalyst layer made of the electrode material for a polymer electrolyte fuel cell according to the present embodiments is preferably 0.1 to 100 µm and more preferably 1 to 50 µm. If the thickness of the catalyst layer is thinner than 0.1 µm, there will be less than adequate amount of active catalyst contained, resulting in insufficient power generation performance. If the thickness of the catalyst layer is thicker than 100 µm, proton conduction and gas diffusion necessary for the electrode reaction will be impeded, thus resulting in a failure to achieve sufficient power generation performance.

When only one of the anode catalyst layer 25a and the cathode catalyst layer 25b is made of the electrode material for polymer electrolyte fuel cells according to the present embodiments, a known catalyst layer may be used as the other of the anode catalyst layer 25a and the cathode catalyst layer 25b. The known catalyst layer may be comprised mainly of an electrode catalyst, which takes a form of metallic particles supported by a conductive support, and an ionomer having a proton conductivity. The thickness of the known catalyst layer may be within the same range of the thickness of the catalyst layer made of the electrode material for polymer electrolyte fuel cells according to the present embodiments.

### (iii) Gas diffusion layer

The gas diffusion layer 26 is formed of a gas diffusion base material. The gas diffusion base material that is usable may be a known base material that is a porous material having electron conductivity. For example, a metal plate, metallic film, conductive polymer, carbon paper, or a woven or non-woven fabric of carbon, for instance, may be cited.

### (iv) Separator

The separator 22 that is usable may be of a known material that has high electron conductivity and high corrosion resistance. For example, carbon material, such as a carbon plate, or stainless steel may be cited.

### Exemplary Embodiments

Hereinbelow, the exemplary embodiments of the present invention for an electrode material will be described in detail. Note that the present invention is not limited by these exemplary embodiments.

### (First exemplary embodiment)

### (1) Process of fabricating an electrode catalyst having an active catalyst supported on a conductive support

PdCl₂ and carbon black (CB) were dispersed into deionized water, and the solution was subjected to an ultrasonic process for 30 minutes at 60°C and then dried up. The sample thus obtained was dried overnight at 60°C and then subjected to a hydrogen reduction at 350°C. The sample thus obtained will be referred to as "Pd/CB" hereinafter. The density of Pd in the Pd/CB as measured by the thermogravimetric analysis was 28 wt%.

### (2) Process of coating part of an electrode catalyst with a porous inorganic material

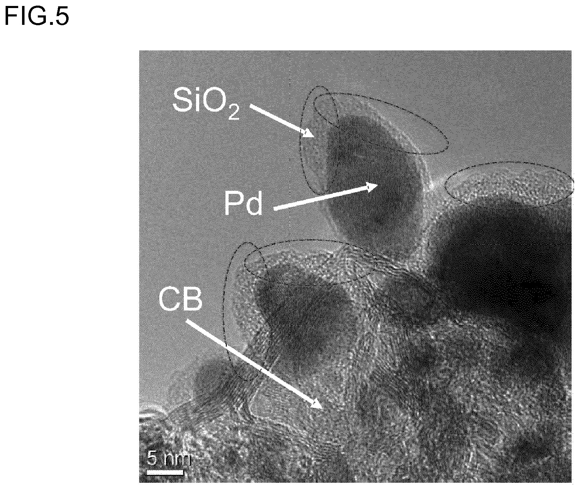

The Pd/CB obtained by the above-described process was dispersed into deionized water, and the solution was subjected to an ultrasonic process for 5 minutes at 60°C. Next, the pH of the solution was adjusted to about 10 by adding triethylamine, and then 3-aminopropyltriethoxysilane was added and the solution was stirred for 30 minutes at 60°C. Next, tetraethoxysilane was added, and the solution was stirred for 180 minutes at 60°C. Then the sample was taken by centrifugal separation and dried overnight at 60°C. The sample thus obtained was now calcinated for 120 minutes at 350°C under a condition where H₂/Ar (H₂: 10 vol%) is circulated. The sample thus obtained will be referred to as "SiO₂/Pd/CB" hereinafter. The mass ratio of the components of the SiO₂/Pd/CB as measured by the thermogravimetric analysis was SiO₂/Pd/CB = 25%/21%/54%. Also, it was confirmed by the transmission electron microscope that mainly the Pd of the Pd/CB is coated with SiO₂. Also, the average thickness of the coating was estimated at about 3 nm (FIG. 5).

### (3) Process of modifying the pore surfaces of a porous inorganic material by a basic functional group

The SiO₂/Pd/CB obtained by the above-described process was dispersed into toluene, and the solution was subjected to an ultrasonic process for 5 minutes at room temperature. Next, trimethyl[3-(triethoxysilyl) propyl] ammonium chloride (50wt% methanol solution) was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. The sample thus obtained was dispersed into KOH aqueous solution (KOH: 10 mM), and the solution was stirred for 120 minutes at room temperature to substitute hydroxyl ion for the counterion of a quarternary ammonium group. Then the sample was taken by centrifugal separation, dispersed into deionized water, and stirred for 120 minutes at room temperature so as to be cleaned. Then after the similar cleaning or washing is repeated twice, the sample was taken by centrifugal separation and dried overnight at 120°C. As a result, an electrode material having the SiO₂ pore surface of the SiO₂/Pd/CB modified by a trimethylhydroxypropylammonium group (TMPA) was obtained. The equivalent of the trimethylhydroxypropylammonium group (TMPA) relative to SiO₂ as measured by thermogravimetric analysis was 3.3 meq/g.

### (Second exemplary embodiment)

### (1) Process of fabricating an electrode catalyst having an active catalyst supported on a conductive support

Pd/CB was obtained according to the process performed in (1) of the first exemplary embodiment.

### (2) Process of coating part of an electrode catalyst with a porous inorganic material

SiO₂/Pd/CB was obtained according to the process performed in (2) of the first exemplary embodiment.

### (3) Process of modifying the pore surfaces of a porous inorganic material by a basic functional group

The SiO₂/Pd/CB obtained by the above-described process was dispersed into toluene, and the solution was subjected to an ultrasonic process for 5 minutes at room temperature. Next, 3-aminopropyltetraethoxysilane was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. As a result, an electrode material having the SiO₂ pore surface of the SiO₂/Pd/CB modified by an aminopropyl group (AP) was obtained. The equivalent of the aminopropyl group (AP) relative to SiO₂ as measured by thermogravimetric analysis was 3.0 meq/g.

### (First comparative example)

### (1) Process of fabricating an electrode catalyst having an active catalyst supported on a conductive support

Pd/CB was obtained according to the process performed in (1) of the first exemplary embodiment.

### (2) Process of coating part of an electrode catalyst with a porous inorganic material

SiO₂/Pd/CB was obtained according to the process performed in (2) of the first exemplary embodiment.

### (Third exemplary embodiment)

### (1) Process of fabricating an electrode catalyst having an active catalyst supported on a conductive support

RuCl₂·nH₂O and carbon black (CB) were dispersed into deionized water, and the solution was subjected to an ultrasonic process for 30 minutes at 60°C. Then KOH aqueous solution (KOH: 10 mM) was dropped until the pH of the solution became about 9, and the solution was stirred for 120 minutes at 60°C. Then the sample was taken by centrifugal separation and then dispersed into deionized water. Then the solution was stirred for 120 minutes at room temperature so as to be cleaned. Then after the similar cleaning or washing is repeated twice, the sample was taken by centrifugal separation and dried overnight at 120°C. The sample thus obtained will be referred to as "RuO₂₋ₓ/CB" hereinafter. The density of RuO₂₋ₓ in the RuO₂₋ₓ/CB as measured by the thermogravimetric analysis was 35 wt%.

### (2) Process of coating part of an electrode catalyst with a porous inorganic material

The RuO₂₋ₓ/CB obtained by the above-described process was dispersed into deionized water, and the solution was subjected to an ultrasonic process for 5 minutes at 60°C. Next, the pH of the solution was adjusted to about 10 by adding triethylamine, and then 3-aminopropyltriethoxysilane was added and the solution was stirred for 30 minutes at 60°C. Next, tetraethoxysilane was added, and the solution was stirred for 180 minutes at 60°C. Then the sample was taken by centrifugal separation and dried overnight at 60°C. The sample thus obtained was now calcinated for 120 minutes at 350°C under a condition where N₂ is circulated. The sample thus obtained will be referred to as "SiO₂/RuO₂₋ₓ/CB" hereinafter. The mass ratio of the components of the SiO₂/RuO₂₋ₓ/CB as measured by the thermogravimetric analysis was SiO₂/RuO₂₋ₓ/CB = 31%/24%/45%.

### (3) Process of modifying the pore surfaces of a porous inorganic material by a basic functional group

The SiO₂/RuO₂₋ₓ/CB obtained by the above-described process was dispersed into toluene, and the solution was subjected to an ultrasonic process for 5 minutes at room temperature. Next, trimethyl[3-(triethoxysilyl) propyl] ammonium chloride (50wt% methanol solution) was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. The sample thus obtained was dispersed into KOH aqueous solution (KOH: 10 mM), and the solution was stirred for 120 minutes at room temperature to substitute hydroxyl ion for the counterion of a quarternary ammonium group. Then the sample was taken by centrifugal separation, dispersed into deionized water, and stirred for 120 minutes at room temperature so as to be cleaned. Then after the similar cleaning or washing is repeated twice, the sample was taken by centrifugal separation and dried overnight at 120°C. As a result, an electrode material having the SiO₂ pore surface of the SiO₂/RuO₂₋ₓ/CB modified by a trimethylhydroxypropylammonium group (TMPA) was obtained. The equivalent of the trimethylhydroxypropylammonium group (TMPA) relative to SiO₂ as measured by thermogravimetric analysis was 2.9 meq/g.

### (Fourth exemplary embodiment)

### (1) Process of fabricating an electrode catalyst having an active catalyst supported on a conductive support

RuO₂₋ₓ/CB was obtained according to the process performed in (1) of the third exemplary embodiment.

### (2) Process of coating part of an electrode catalyst with a porous inorganic material

SiO₂/RuO₂₋ₓ/CB was obtained according to the process performed in (2) of the third exemplary embodiment.

### (3) Process of modifying the pore surfaces of a porous inorganic material by a basic functional group

The SiO₂/RuO₂₋ₓ/CB obtained by the above-described process was dispersed into toluene, and the solution was subjected to an ultrasonic process for 5 minutes at room temperature. Next, 3-aminopropyltetraethoxysilane was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. As a result, an electrode material having the the SiO₂ pore surface of the SiO₂/RuO₂₋ₓ/CB modified by an aminopropyl group (AP) was obtained. The equivalent of the aminopropyl group (AP) relative to SiO₂ as measured by thermogravimetric analysis was 3.1 meq/g.

### (Second comparative example)

### (1) Process of fabricating an electrode catalyst having an active catalyst supported on a conductive support

RuO₂₋ₓ/CB was obtained according to the process performed in (1) of the third exemplary embodiment.

### (2) Process of coating part of an electrode catalyst with a porous inorganic material

SiO₂/RuO₂₋ₓ/CB was obtained according to the process performed in (2) of the third exemplary embodiment.

### (Fifth exemplary embodiment)

### (1) Process of fabricating an electrode catalyst having an active catalyst supported on a conductive support

AgNO₃ and carbon black (CB) were dispersed into deionized water, and the solution was subjected to an ultrasonic process for 30 minutes at 60°C. The sample thus obtained was dried overnight at 60°C and then subjected to a hydrogen reduction at 400°C. The sample thus obtained will be referred to as "Ag/CB" hereinafter. The density of Ag in the Ag/CB as measured by the thermogravimetric analysis was 15 wt%.

### (2) Process of coating part of an electrode catalyst with a porous inorganic material

The Ag/CB obtained by the above-described process was dispersed into deionized water, and the solution was subjected to an ultrasonic process for 5 minutes at 60°C. Next, the pH of the solution was adjusted to about 10 by adding triethylamine, and then 3-aminopropyltriethoxysilane was added and the solution was stirred for 30 minutes at 60°C. Next, tetraethoxysilane was added, and the solution was stirred for 180 minutes at 60°C. Then the sample was taken by centrifugal separation and dried overnight at 60°C. The sample thus obtained was now calcinated for 120 minutes at 350°C under a condition where H₂/Ar (H₂: 10 vol%) is circulated. The sample thus obtained will be referred to as "SiO₂/Ag/CB" hereinafter. The mass ratio of the components of the SiO₂/Ag/CB as measured by the thermogravimetric analysis was SiO₂/Ag/CB = 40%/9%/51%.

### (3) Process of modifying the pore surfaces of a porous inorganic material by a basic functional group

The SiO₂/Ag/CB obtained by the above-described process was dispersed into toluene, and the solution was subjected to an ultrasonic process for 5 minutes at room temperature. Next, trimethyl[3-(triethoxysilyl) propyl] ammonium chloride (50wt% methanol solution) was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. The sample thus obtained was dispersed into KOH aqueous solution (KOH: 10 mM), and the solution was stirred for 120 minutes at room temperature to substitute hydroxyl ion for the counterion of a quarternary ammonium group. Then the sample was taken by centrifugal separation, dispersed into deionized water, and stirred for 120 minutes at room temperature so as to be cleaned. Then after the similar cleaning or washing is repeated twice, the sample was taken by centrifugal separation and dried overnight at 120°C. As a result, an electrode material having the SiO₂ pore surface of the SiO₂/Ag/CB modified by a trimethylhydroxypropylammonium group (TMPA) was obtained. The equivalent of the trimethylhydroxypropylammonium group (TMPA) relative to SiO₂ as measured by thermogravimetric analysis was 3.3 meq/g.

### (Sixth exemplary embodiment)

### (1) Process of fabricating an electrode catalyst having an active catalyst supported on a conductive support

Ag/CB was obtained according to the process performed in (1) of the fifth exemplary embodiment.

### (2) Process of coating part of an electrode catalyst with a porous inorganic material

SiO₂/Ag/CB was obtained according to the process performed in (2) of the fifth exemplary embodiment.

### (3) Process of modifying the pore surfaces of a porous inorganic material by a basic functional group

The SiO₂/Ag/CB obtained by the above-described process was dispersed into toluene, and the solution was subjected to an ultrasonic process for 5 minutes at room temperature. Next, 3-aminopropyltetraethoxysilane was added, and the solution was stirred for 120 minutes at room temperature. Then the sample was taken by centrifugal separation and then dispersed into methanol/water (methanol: 80 vol%). Then the solution was stirred for 30 minutes at room temperature so as to be cleaned. Then the sample was again taken by centrifugal separation and dried overnight at 120°C. As a result, an electrode material having the the SiO₂ pore surface of the SiO₂/Ag/CB modified by an aminopropyl group (AP) was obtained. The equivalent of the aminopropyl group (AP) relative to SiO₂ as measured by thermogravimetric analysis was 3.5 meq/g.

### (Third comparative example)

### (1) Process of fabricating an electrode catalyst having an active catalyst supported on a conductive support

Ag/CB was obtained according to the process performed in (1) of the fifth exemplary embodiment.

### (2) Process of coating part of an electrode catalyst with a porous inorganic material

SiO₂/Ag/CB was obtained according to the process performed in (2) of the fifth exemplary embodiment.

### <Fabrication of cathode catalyst slurry>

For each electrode material obtained in each of the above-described first to sixth exemplary embodiments and the above-described first to third comparative examples, the electrode material is dispersed into a mixed solution of a Nafion solution of 20 wt% (Nafion (made by DuPont) : registered trademark), water and 1-propanol. Then the mixed solution was subjected to an ultrasonic process for 60 minutes at room temperature so as to fabricate a cathode catalyst slurry. Here, each cathode catalyst slurry was fabricated under the following conditions. The total volume is 50 ml. The volume ratio of water and 1-propanol is [water]/[propanol] = 1/4. The active catalyst contained is 0.5 g. The mass ratio of Nafion to carbon black is 1.0.

### <Fabrication of cathode>

The above-described cathode catalyst slurry was applied to a gas diffusion base material (carbon paper), whose area is 5 cm², so as to form a cathode catalyst layer, and then the thus formed cathode catalyst was dried overnight. Note that amount of each active catalyst used was 0.5 mg/ cm².

### <Fabrication of anode catalyst slurry>

Platinum-supported carbon black (TEC10E50E, made by TANAKA KIKINZOKU KOGYO K.K.) is dispersed into a mixed solution of a Nafion solution of 20 wt% (Nafion (made by DuPont): registered trademark), water and 1-propanol. Then the mixed solution was subjected to an ultrasonic process for 60 minutes at room temperature so as to fabricate a cathode catalyst slurry. Here, each cathode catalyst slurry was fabricated under the following conditions. The total volume is 50 ml. The volume ratio of water and 1-propanol is [water]/[propanol] = 1/4. The active catalyst (platinum) contained is 0.5 g. The mass ratio of Nafion to carbon black is 1.0.

### <Fabrication of anode>

The above-described anode catalyst slurry was applied to a gas diffusion base material (carbon paper), whose area is 5 cm², so as to form an anode catalyst layer, and then the thus formed anode catalyst layer was dried overnight. Note that amount of each active catalyst (platinum) used was 0.5 mg/cm².

### <Fabrication of membrane electrode assembly>

Hot pressing was performed with the electrolyte membrane held between the above-described anode and the above-described cathode, thereby fabricating a membrane electrode assembly. In the process of fabricating the membrane electrode assembly, Nafion 212 (made by DuPont: registered trademark) was used as the electrolyte membrane. The hot pressing was performed under the conditions of 120°C, 5 MPa, and 160 seconds.

### <Fabrication of fuel cell>

A separator, where a fuel passage is formed, and a separator, where an oxidant passage is formed, were arranged respectively on an anode surface and a cathode surface of the above-described membrane electrode assembly, thereby fabricating a fuel cell. The effective area of the electrode was 5 cm². Both the fuel passage and the oxidant passage are each a 1-path serpentine type passage. The fuel passage and the oxidant passage are arranged in parallel with each other.

### <Power generation test>

For a fuel cell according to each of the first to sixth exemplary embodiments and each of the first to third comparative examples, a power generation test was carried out under the following conditions. The power generation test was carried at an initial state and after a potential cycling test described later.
Anode gas: H₂, at a flow rate of 100 ml/min.
Cathode gas: O₂, at a flow rate of 100 ml/min.
Cell temperature: 70°C.
Bubbler temperature for anode gas: 70°C.
Bubbler temperature for cathode gas: 70°C.

### <Measurement of cyclic voltammograph (CV)>

For each of the first to sixth exemplary embodiments and each of the first to third comparative examples, a CV measurement was made for the purpose of evaluating the elution resistance, under the following conditions. An oxidation-reduction charge amount of each active catalyst observed in the CV measurement was used as the indicator for indicating the effective surface area of each active catalyst. The CV measurement was made both at an initial state and after a potential cycling test described later.
Anode gas: H₂, at a flow rate of 100 ml/min.
Cathode gas: N₂, at a flow rate of 100 ml/min.
Cell temperature: 70°C.
Bubbler temperature for anode gas: 70°C.
Bubbler temperature for cathode gas: 70°C.
Potential scan range: 0.05 V to 1.2 V (vs RHE)
Potential scan rate: 0.05 V/s.

### <Potential cycling test>

For a fuel cell according to each of the first to sixth exemplary embodiments and each of the first to third comparative examples, a potential cycling test was conducted, as a deterioration acceleration test, under the following conditions.
Anode gas: H₂, at a flow rate of 100 ml/min.
Cathode gas: N₂, at a flow rate of 100 ml/min.
Cell temperature: 70°C.
Bubbler temperature for anode gas: 70°C.
Bubbler temperature for cathode gas: 70°C.
Potential scan range: 0.05 V to 1.2 V (vs RHE)
Potential scan rate: 0.05 V/s.
The number of potential cycles: 10000.

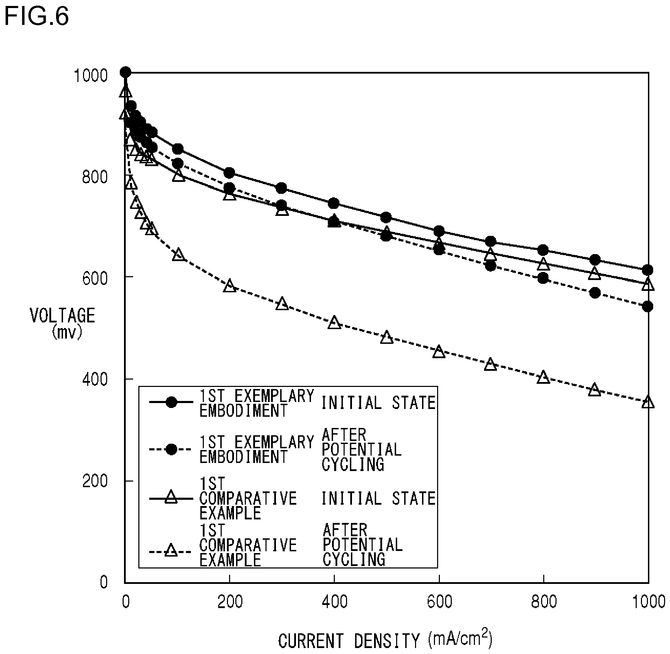

FIG. 6 shows the results of power generation tests at an initial state and after a potential cycling test, as to fuel cells according to the first exemplary embodiment and the first comparative example. In the fuel cell according to the first comparative example, a drop in the power generation performance was observed after the potential cycling test. In contrast to this, the fuel cell according to the first exemplary embodiment kept almost the same level of the power generation performance as that at the initial state, even after the potential cycling test. Also, in the initial state, the fuel cell according to the first exemplary embodiment exhibited a higher power generation performance than that of the first comparative example.

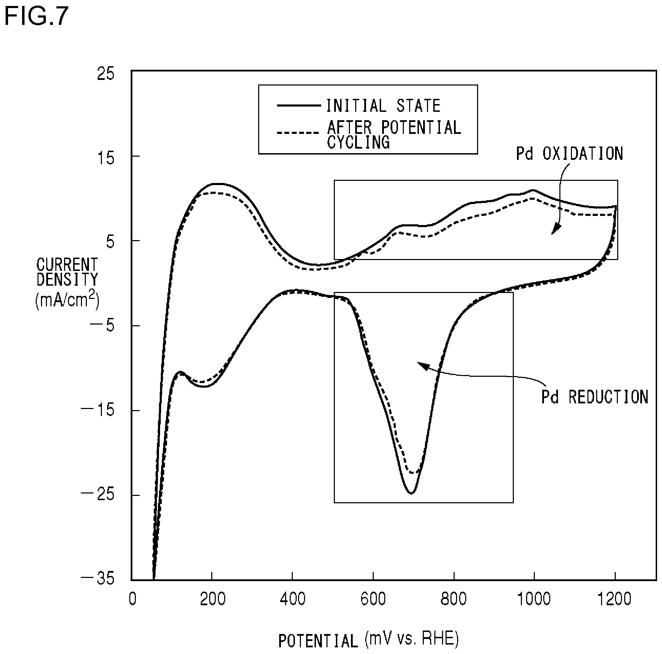

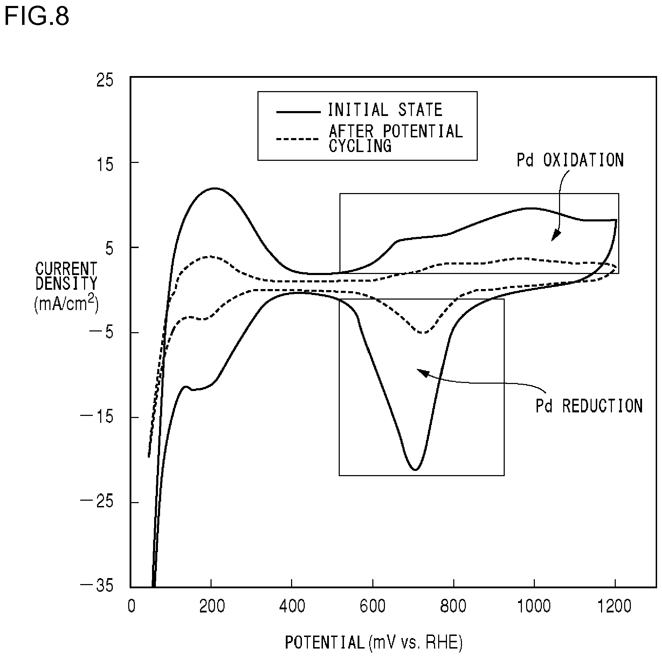

As for the fuel cells according to the first exemplary embodiment and the first comparative example, the results of CV measurements at the initial state and after the potential cycling test are shown in FIG. 7 and FIG. 8, respectively. In the fuel cell according to the first comparative example, a drop in the oxidation-reduction charge amount of the active catalyst (Pd) was observed after the potential cycling test. In other words, the effective surface area of the active catalyst (Pd) was dropped. On the other hand, the fuel cell according to the first exemplary embodiment kept almost the same level of the oxidation-reduction charge amount of the active catalyst (Pd), even after the potential cycling test. In other words, almost no drop in the effective surface area of the active catalyst (Pd) was observed.

As for each of the fuel cells according to the first to sixth exemplary embodiments and each of the first to third comparative examples, Table 1 shows the voltage at the initial state during the power generation of 300 mA/cm², the voltage drop amount after the potential cycle, and the effective surface area maintenance ratio (oxidation-reduction charge amount maintenance ratio) of each active catalyst after the potential cycle.

**[Table 1]**

| | BASIC GROUP | EQUIVALENT AMOUNT OF BASIC GROUP RELATIVE TO SiO₂ (meq/g) | INITIAL VOLAGE (mV) | VOLTAGE DROP AMOUNT AFTER POTENTIAL CYCLING (mV) | EFFECTIVE SURFACE AREA MAINTENANCE RATIO OF ACTIVE CATALYST (%) |
|---|---|---|---|---|---|
| 1ST EXEMPLARY EMBODIMENT | TMPA | 3.3 | 773 | 31 | 95 |
| 2ND EXEMPLARY EMBODIMENT | AP | 3 | 760 | 45 | 89 |
| 1ST COMPARATIVE EXAMPLE | - | - | 735 | 188 | 20 |
| 3RD EXEMPLARY EMBODIMENT | TMPA | 2.9 | 746 | 33 | 95 |
| 4TH EXEMPLARY EMBODIMENT | AP | 3.1 | 721 | 50 | 88 |
| 2ND COMPARATIVE EXAMPLE | - | - | 583 | 196 | 18 |
| 5TH EXEMPLARY EMBODIMENT | TMPA | 3.3 | 689 | 62 | 78 |
| 6TH EXEMPLARY EMBODIMENT | AP | 3.5 | 525 | 79 | 65 |
| 3RD COMPARATIVE EXAMPLE | - | - | 248 | 220 | 5 |

As described above, the porous surfaces of the porous inorganic material coating an electrode catalyst are modified by the basic functional group, and the vicinity of the active catalyst is created in a basic ambience. Thereby, the elution of active catalysts in a wide range thereof is suppressed and a significantly higher power generation performance than the conventional practice is maintained.

The present invention is not limited to the above-described embodiments only. It is understood that various modifications such as changes in design may be made based on the knowledge of those skilled in the art, and the embodiments added with such modifications are also within the scope of the present invention.

### [DESCRIPTION OF THE REFERENCE NUMERALS]

10 Electrode material
11 Active catalyst
12 Conductive support
13 Electrode catalyst
14 Porous inorganic material
15 Pore surface modified by a basic functional group
16 Electrolyte
20 Fuel cell
21 Membrane electrode assembly
22a Separator
22b Separator
23 Electrolyte membrane
24a Anode
24b Cathode
25a Anode catalyst layer
26a Anode gas diffusion layer
25b Cathode catalyst layer
26b Cathode gas diffusion layer
27a Gas passage
27b Gas passage

### [INDUSTRIAL APPLICABILITY]

The present invention is applicable to an electrode material used for fuel cells, electrolysis cells and the like.

## Claims

1. An electrode material (10) suitable for fuel cells and electrolysis cells comprising:
an electrode catalyst (13); and
a porous inorganic material (14) partially coating a surface of the electrode catalyst, wherein the porous inorganic material (14) contains silica (SiO2), wherein the electrode catalyst (13) is of a form such that the active catalyst (11) is supported by a conductive support (12)
wherein a pore surface of the porous inorganic material is modified by a basic functional group (15) by reacting the porous inorganic material (14) with an organosilane compound,
the organosilane compound contains at least one or more of primary amino group, secondary amino group, tertiary amino group, and quarternary ammonium group.

2. An electrode material (10) according to claim 1, wherein an equivalent amount of the basic functional group (15) is 0.01 meq/g or more relative to the porous inorganic material (14).

3. An electrode material (10) according to any one of claim 1 to claim 2, wherein an average coating thickness in a part of the inorganic material (14) coating the electrode catalyst (13) is 0.5 nm to 100 nm.

4. An electrode material (10) according to any one of claim 1 to claim 3, wherein the electrode catalyst (13) contains an active catalyst (11) comprised of a metal, a metallic complex, an oxide, a nitride, or a carbide containing at least one or more of Sc, Ti, V, Cr, Mn, Fe, Co, Ni, Cu, Sr, Y, Zr, Nb, Mo, Ru, Rh, Pd, Ag, Sn, Ba, La, Ce, Hf, Re, Os, Ir, Pt, and Au.

5. An electrode material (10) according to claim 1, wherein the conductive support (12) is a conductive carbon material, such as acetylene black, ketjen black, fullerene, carbon nanotube, or carbon nanoonion, a conductive metal oxide, such as titanium oxide or tin oxide, or a mixture of these.

6. An electrode material (10) according to claim 5, wherein the average particle diameter of active catalyst particles (11) is 100 nm or smaller, preferably 20 nm or smaller, and more preferably 10 nm or smaller.

7. An electrode material (10) according to any one of claim 5 to claim 6, wherein the density of the active catalyst calculated as (the mass of active catalyst(11)) / [(the mass of active catalyst(11)) + (the mass of conductive support (12))], is 5 to 80%.

8. An electrode material (10) according to any one of claim 1 to claim 7, wherein the average pore size of the porous inorganic material (14) is 0.1 nm to 100 nm.

9. A membrane electrode assembly (21) comprising:
an ion-conducting electrolyte membrane (23);
a cathode catalyst layer (25b) provided on one surface of the electrolyte membrane; and
an anode catalyst layer (25a) provided on one surface of the electrolyte membrane,
wherein at least one of the cathode catalyst layer and the anode catalyst layer includes an electrode material according to any one of claim 1 to claim 8.

10. A fuel cell stack comprising a membrane electrode assembly (21) according to claim 9.

11. A method of manufacturing an electrode material (10) suitable for fuel cells and electrolysis cells comprising:
partially coating a surface of an electrode catalyst (13) with a porous inorganic material; and
modifying a pore surface of the porous inorganic material (14) by a basic functional group (15), wherein the porous inorganic material (14) contains silica (SiO2), wherein the modifying the pore surface thereof by the basic function group (15) is to react the porous inorganic material (14) with an organosilane compound, and
the organosilane compound contains at least one or more of primary amino group, secondary amino group, tertiary amino group, and quarternary ammonium group.

## Patentansprüche

1. Ein Elektrodenmaterial (10), welches für Brennstoff- und Elektrolysezellen geeignet ist, umfassend:
- einen Elektrodenkatalysator (13) und
- ein poröses anorganisches Material (14), welches die Oberfläche des Elektrodenkatalysators teilweise beschichtet, wobei das poröse anorganische Material (14) Siliciumdioxid (SiO₂) enthält und der Elektrodenkatalysator (13) eine derartige Gestalt besitzt, dass sich der aktive Katalysator (11) auf einem leitfähigen Träger (12) befindet, wobei:
- eine porige Oberfläche des porösen anorganischen Materials durch eine basische funktionelle Gruppe (15) durch Umsetzung des porösen anorganischen Materials (14) mit einer Organosilanverbindung modifiziert worden ist und
- die Organosilanverbindung mindestens eine oder mehrere von primärer Aminogruppe, sekundärer Aminogruppe, tertiärer Aminogruppe und quaternärer Ammoniumgruppe enthält.

2. Ein Elektrodenmaterial (10) nach Anspruch 1, wobei der äquivalente Anteil der basischen funktionellen Gruppe (15) 0,01 mVal/g oder größer, bezogen auf das poröse anorganische Material (14), beträgt.

3. Ein Elektrodenmaterial (10) nach Anspruch 1 oder 2, wobei die durchschnittliche Dicke der Beschichtung in einem Teil des anorganischen Materials (14), welches den Elektrodenkatalysator (13) beschichtet, 0,5 nm bis 100 nm beträgt.

4. Ein Elektrodenmaterial (10) nach einem der Ansprüche 1 bis 3, wobei der Elektrodenkatalysator (13) einen aktiven Katalysator (11) enthält, der ein Metall, einen Metallkomplex, ein Oxid, ein Nitrid oder ein Carbid umfasst, das/der mindestens eines oder mehrere von Sc, Ti, V, Cr, Mn, Fe, Co, Ni, Cu, Sr, Y, Zr, Nb, Mo, Ru, Rh, Pd, Ag, Sn, Ba, La, Ce, Hf, Re, Os, Ir, Pt und Au enthält.

5. Ein Elektrodenmaterial (10) nach Anspruch 1, wobei der leitfähige Träger (12) ein leitfähiges Kohlenstoffmaterial wie Acetylenruß, Ketjenruß, Fulleren, Kohlenstoffnanoröhrchen oder Kohlenstoffnanozwiebel, ein leitfähiges Metalloxid wie Titanoxid bzw. Zinnoxid oder ein Gemisch davon ist.

6. Ein Elektrodenmaterial (10) nach Anspruch 5, wobei der durchschnittliche Teilchendurchmesser der aktiven Katalysatorteilchen (11) 100 nm oder weniger, vorzugsweise 20 nm oder weniger, und noch bevorzugter 10 nm oder weniger beträgt.

7. Ein Elektrodenmaterial (10) nach Anspruch 5 oder 6, wobei die als (Masse des aktiven Katalysators (11))/[(Masse des aktiven Katalysators (11)) + (Masse des leitfähigen Trägers (12))] berechnete Dichte des aktiven Katalysators 5 bis 80 % beträgt.

8. Ein Elektrodenmaterial (10) nach einem der Ansprüche 1 bis 7, wobei die durchschnittliche Porengröße des porösen anorganischen Materials (14) 0,1 nm bis 100 nm beträgt.

9. Eine Membranelektrodeneinheit (21) umfassend:
- eine ionenleitfähige Elektrolytmembran (23),
- eine Kathodenkatalysatorschicht (25b), die auf einer Fläche der Elektrolytmembran aufgebracht ist, und
- eine Anodenkatalysatorschicht (25a), die auf einer Fläche der Elektrolytmembran aufgebracht ist,
wobei
mindestens eine von Kathodenkatalysatorschicht und Anodenkatalysatorschicht ein Elektrodenmaterial nach einem der Ansprüche 1 bis 8 umfasst.

10. Ein Brennstoffzellenstapel umfassend eine Membranelektrodeneinheit (21) nach Anspruch 9.

11. Ein Verfahren zur Herstellung eines für Brennstoff- und Elektrolysezellen geeigneten Elektrodenmaterials (10) umfassend:
- teilweise Beschichten eine Oberfläche eines Elektrodenkatalysators (13) mit einem porösen anorganischen Material und
- Modifizieren eine porigen Oberfläche des porösen anorganischen Materials (14) durch eine basische funktionelle Gruppe (15),
wobei das poröse anorganische Material (14) Siliciumdioxid (SiO₂) enthält, das Modifizieren seiner porigen Oberfläche durch die basische funktionelle Gruppe (15) in der Umsetzung des porösen anorganischen Materials (14) mit einer Organosilanverbindung besteht und die Organosilanverbindung mindestens eine oder mehrere von primärer Aminogruppe, sekundärer Aminogruppe, tertiärer Aminogruppe und quaternärer Ammoniumgruppe enthält.

## Revendications

1. Matériau d'électrode (10) approprié pour des piles à combustible et des cellules d'électrolyse comprenant :
un catalyseur d'électrode (13) ; et
un matériau inorganique poreux (14) revêtant partiellement une surface du catalyseur d'électrode, où le matériau inorganique poreux (14) contient de la silice (SiO₂), où le catalyseur d'électrode (13) se présente sous une forme telle que le catalyseur actif (11) est supporté par un support conducteur (12)
dans lequel une surface de pores du matériau inorganique poreux est modifiée par un groupe fonctionnel basique (15) en faisant réagir le matériau inorganique poreux (14) avec un composé organosilane,
le composé organosilane contient au moins un ou plusieurs groupe(s) parmi un groupe amino primaire, un groupe amino secondaire, un groupe amino tertiaire, et un groupe ammonium quaternaire.

2. Matériau d'électrode (10) selon la revendication 1, dans lequel une quantité équivalente du groupe fonctionnel basique (15) est supérieure ou égale à 0,01 meq/g par rapport au matériau inorganique poreux (14).

3. Matériau d'électrode (10) selon l'une quelconque des revendications 1 à 2, dans lequel une épaisseur moyenne de revêtement dans une partie du matériau inorganique (14) revêtant le catalyseur d'électrode (13) est comprise entre 0,5 nm et 100 nm.

4. Matériau d'électrode (10) selon l'une quelconque des revendications 1 à 3, dans lequel le catalyseur d'électrode (13) contient un catalyseur actif (11) comprenant un métal, un complexe métallique, un oxyde, un nitrure, ou un carbure contenant au moins un ou plusieurs élément(s) parmi Sc, Ti, V, Cr, Mn, Fe, Co, Ni, Cu, Sr, Y, Zr, Nb, Mo, Ru, Rh, Pd, Ag, Sn, Ba, La, Ce, Hf, Re, Os, Ir, Pt, et Au.

5. Matériau d'électrode (10) selon la revendication 1, dans lequel le support conducteur (12) est un matériau de carbone conducteur, tel que le noir d'acétylène, le noir de ketjen, le fullerène, un nanotube de carbone, ou un nano-oignon de carbone, un oxyde métallique conducteur, tel que l'oxyde de titane ou l'oxyde d'étain, ou un mélange de ceux-ci.

6. Matériau d'électrode (10) selon la revendication 5, dans lequel le diamètre moyen de particules de catalyseur actif (11) est inférieur ou égal à 100 nm, de préférence inférieur ou égal à 20 nm, et plus préférablement inférieur ou égal à 10 nm.

7. Matériau d'électrode (10) selon l'une quelconque des revendications 5 et 6, dans lequel la densité du catalyseur actif calculée comme suit (la masse de catalyseur actif (11)) / [(la masse de catalyseur actif (11)) + (la masse de support conducteur (12))], est comprise entre 5 et 80%.

8. Matériau d'électrode (10) selon l'une quelconque des revendications 1 à 7, dans lequel la taille moyenne des pores du matériau inorganique poreux (14) est comprise entre 0,1 nm et 100 nm.

9. Ensemble membrane-électrodes (21) comprenant :
une membrane électrolytique conductrice d'ions (23) ;
une couche de catalyseur cathodique (25b) prévue sur une surface de la membrane électrolytique ; et
une couche de catalyseur anodique (25a) prévue sur une surface de la membrane électrolytique,
dans lequel au moins l'une de la couche de catalyseur cathodique et de la couche de catalyseur anodique comporte un matériau d'électrode selon l'une quelconque des revendications 1 à 8.

10. Empilement de piles à combustible comprenant un ensemble membrane-électrodes (21) selon la revendication 9.

11. Procédé de fabrication d'un matériau d'électrode (10) approprié pour des piles à combustible et des cellules d'électrolyse comprenant le fait :
de revêtir partiellement une surface d'un catalyseur d'électrode (13) avec un matériau inorganique poreux ; et
de modifier une surface de pores du matériau inorganique poreux (14) par un groupe fonctionnel basique (15), où le matériau inorganique poreux (14) contient de la silice (SiO₂), où la modification de sa surface de pores par le groupe fonctionnel basique (15) consiste à faire réagir le matériau inorganique poreux (14) avec un composé organosilane, et
le composé organosilane contient au moins un ou plusieurs groupe(s) parmi un groupe amino primaire, un groupe amino secondaire, un groupe amino tertiaire, et un groupe ammonium quaternaire.
